# EUROPEAN PATENT SPECIFICATION

(11) **EP 1 209 033 B1**
(45) Date of publication and mention of the grant of the patent: **08.12.2004**
(21) Application number: 01307972.8
(22) Date of filing: 19.09.2001
(51) Int. Cl.: B60R 9/06

(54) **A coupling for a vehicle load carrier**
Kupplungsvorrichtung für Kraftfahrzeuggepäckträger
Attelage pour porte bagages de véhicule

(30) Priority: 27.11.2000 GB 0028882
(43) Date of publication of application: 29.05.2002
(73) Proprietor: Wright, Richard, Leamington Spa CV33 9PF (GB)
(72) Inventor: Wright, Richard, Leamington Spa CV33 9PF (GB)
(74) Representative: Dempster, Benjamin John Naftel

(56) References cited:
- GB-A- 2 337 236
- US-A- 4 989 765
- US-A- 5 460 304
- US-A- 5 850 959
- US-A- 6 006 973

## Description

The invention relates to a carrier and a coupling.

It is known, for example, from GB 2337236 which shows the features at the preamble of claim 1, to provide a coupling which fits on to the tow ball of a vehicle and which mounts a carrier which may be a multipurpose carrier or a bicycle carrier. The carrier may comprise a base framework which is pivotally connected to the coupling so that it can be pivoted into a horizontal position for use, in which bicycles are stood on the base framework, and also pivoted into a vertical position for storage in which it lies next to the rear of a vehicle and can be attached to a vertical attachment frame mounted to the coupling. Thus, the carrier can be conveniently pivoted into the vertical storage position when the carrier is not to be used. In the storage position, the overall length of the vehicle and carrier is reduced. The carrier and coupling disclosed in the above mentioned patent application however cannot be used with 4x4 vehicles which have a spare tyre mounted on the tailgate. The spare tyre interferes with the vertical frame and even if that is removed, the carrier cannot be pivoted to vertical.

According to the invention there is provided a carrier and a coupling for mounting the carrier on to a vehicle, the coupling having means for removably mounting the coupling to a tow ball of a vehicle, the carrier comprising a carrying base which is pivotally mounted to the coupling so as to be pivotable between a generally horizontal use position and a generally vertical storage position, first carrier mounting means being provided for pivotally mounting the carrier to the coupling, a post being provided mounted on the coupling by first post mounting means, the carrying base being arranged to be attached to the post in the storage position thereof, characterised in that second carrier mounting means is provided for pivotally mounting the carrier to the coupling, the second carrier mounting means being arranged to mount the carrier further from the means for removably mounting the coupling to a tow ball of a vehicle than the first carrier mounting means and hence further to the rear of the vehicle, in use, and second post mounting means provided, the second post mounting means being arranged to mount the post further from the means for removably mounting the coupling to a tow ball of a vehicle than the first post mounting means and hence further to the rear of the vehicle, in use.

Because the coupling provides two mounting positions at different spacings from the means for mounting to a vehicle, account can be taken of the presence or absence of a. spare wheel on the rear of the vehicle. In this way, the coupling is universal.

The carrier and coupling may also include a vertical frame, of which the post is a part, and the carrying base may be arranged to be attached to the vertical frame in the storage position.

The carrier may be a carrier of any suitable kind and may be arranged to carry a box, for example, but preferably the carrier is a bicycle carrier and most preferably the carrier is arranged to carry a plurality of bicycles.

The coupling may take any suitable form. In one embodiment, the coupling includes a main elongate element, means to receive a tow ball connected to one end of the main elongate element, and a strut between the tow ball receiving means and the main elongate element. This provides a strong triangulated structure. Preferably, at least one means for mounting the carrier is on the main elongate element between the connection to the strut and the connection to the tow ball receiving means and in a particularly preferred embodiment, both means for mounting the carrier are between the connection to the strut and the connection to the tow ball receiving means.

An embodiment of the invention will now be described by way of example and with reference to the accompanying drawings, in which:
Figure 1 is a side elevation of a coupling and carrier in the embodiment of the invention mounted on to a vehicle;

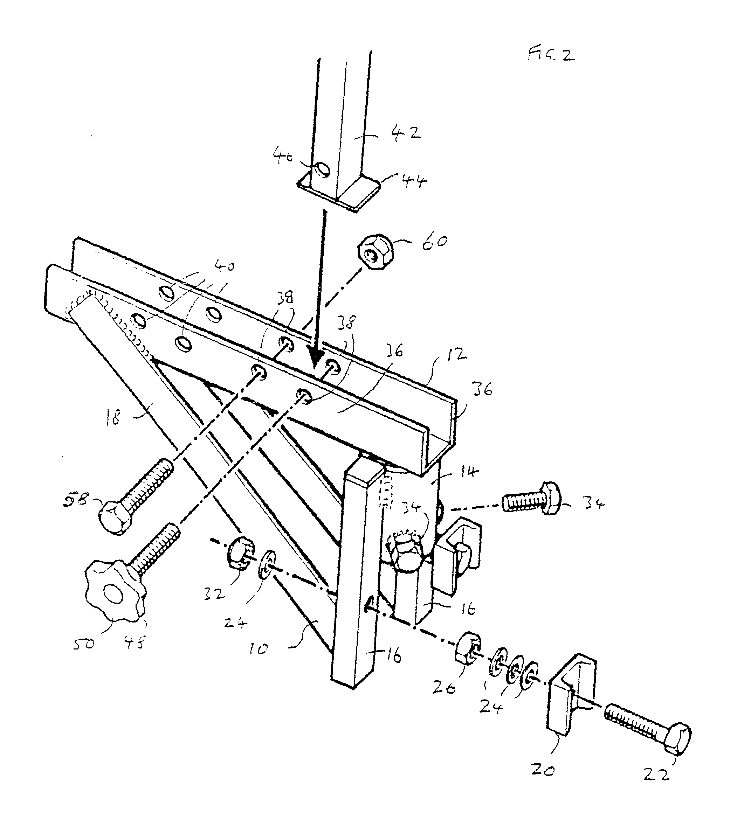

Figure 2 is a partly exploded view of the coupling of Figure 1; and

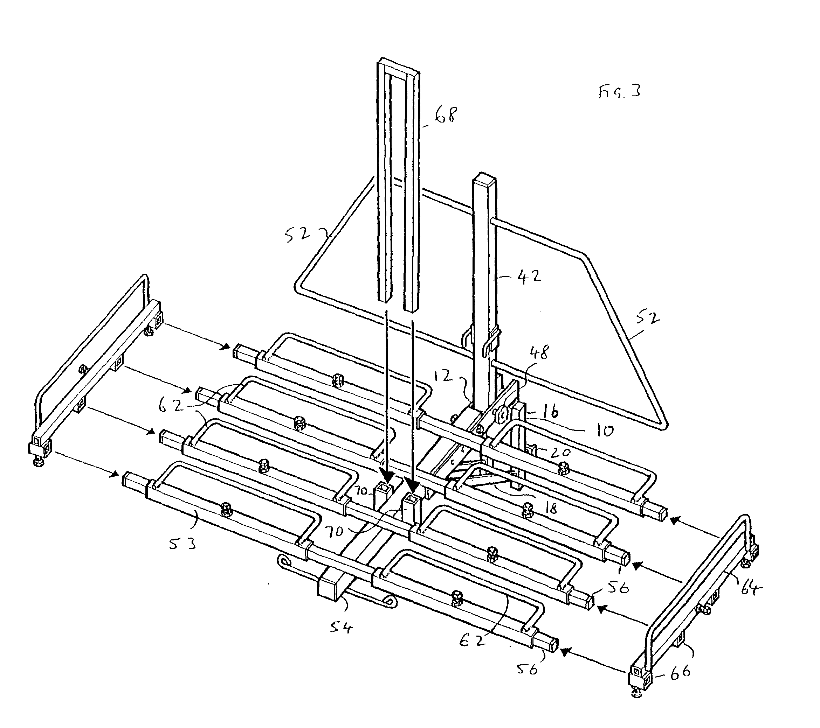

Figure 3 is a perspective view of the coupling and carrier of Figure 1.

The coupling 10 of the invention comprises a main elongate element 12 in the form of a U-shaped profile. A short cylindrical tube 14 is attached to the underside of the U-shaped profile 12 at one end, which is the front end in use. An upright 16 in the form of a square section tube is connected to each side of the cylindrical part 14 to each side of the U-shaped profile 12. A strut 18 extends from the lower end of each upright 16 to the opposite end of the U-shaped profile 12. The parts 12, 14, 16, 18 are made of steel and are welded together.

A foot 20 in the form of a metal U-shaped profile is bolted to each upright 16 by means of a bolt 22 which passes through the U-shaped foot 20, through a plurality of washers 24 and a nut 26, through opposed apertures in the tubular upright 16, through a further washer 24 and into a nut 32. The open channel defined by each U-shaped foot 20 faces forwards.

The cylindrical part 14 includes in its wall adjacent its front lower edge two spaced threaded apertures 33 which receive bolts 34, and in its wall adjacent its rear lower edge includes two spaced plain walled apertures 30.

Each upstanding wall 36 of the U-shaped profile 12 includes four longitudinally spaced apertures 38, 40 between the connection to the cylindrical part 14 and the connection to the struts 18. The assembly includes a vertical post 42 in the form of a square section tube. The vertical post 42 has a foot plate 44 across its lower end. The lower end of the vertical post 42 is arranged to be received in the channel of the U-shaped profile 12 and includes an aperture 46 to be aligned with one of the pairs of apertures 38, 40 by a bolt 48 having a large head 50 so that it can be manually screwed through the apertures 38, 46. To each side of the vertical post 42 there is a steel rod 52. Each steel rod 52 is bent in two places and connected to the vertical post 42 at top and bottom and forms a vertical frame. The two loops 52 together form a trapezium shape. The vertical post 42 and two bent steel rods 52 together form the aforesaid "vertical frame".

The assembly also includes a carrying base 53 attached to the coupling 10. The carrying base 52 consists of a main beam 54 and cross beams 56.

The main beam 54 is in the form of a square section tube which is slidable in the U-shaped profile 12 of the coupling 10. The beam 54 includes a pair of opposed apertures (not shown) to receive a bolt 58. The bolt 58 also passes through the next pair of apertures 38, 40 in the profile 12 behind the apertures 38, 40 mounting the vertical post 42 by means of the bolt 48. The bolt 58 is secured by a nut 60 to secure the main beam 54. The cross beams 56 are perpendicular to the main beam 54. The cross beams 56 are equally spaced along the main beam 54 being welded to the upper surface thereof at their mid points. Each cross beam 56 mounts two loops 62, one to each side of the main beam 54. Two end pieces 64 are provided. Each end piece 64 mounts four equally spaced sockets 66 to receive the ends of the cross beams 56 on one side.

A tall U-shaped part 68 has legs the ends of which are received in sockets mounted one to each side of the main beam 54 so that the U-shaped part stands upright midway along the main beam 54.

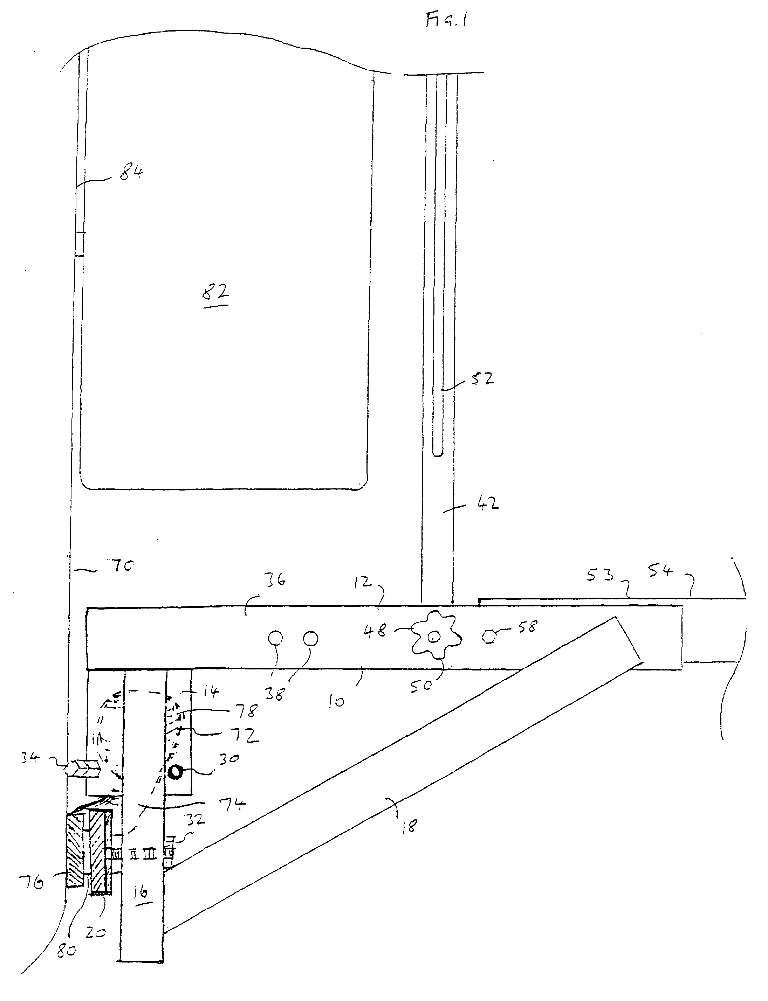

Fig 1 shows a vehicle 70 which has a tow hitch 72. The tow hitch 72 has a neck 74 leading from a mounting plate 76 to a ball 78. The mounting plate 76 of the tow hitch 72 is secured to the vehicle by two bolts 80, one to each side of the plate 76. In use, the coupling 10 is dropped onto the tow ball 78 of the vehicle 70 as shown in Fig 1 so that the cylindrical tube 14 of the coupling 10 receives the tow ball 78 and the feet 20 locate on the heads of the tow hitch bolts 80 which are received in the channels of the U-shaped feet 20. This stably mounts the coupling 10. The washers 24 can be arranged on each bolt 22 on either side of the upright 16 to adjust the position of the U-shaped foot 20 in relation to the upright 16 and thereby facilitate an exactly horizontal mounting position for the elongate element 12 of the coupling 10. The bolts 34 are tightened into the threaded apertures 33 so that they protrude into the cylindrical tube 14 below the ball 78 to prevent removal of the coupling 10 from the vehicle 70. A padlock (not shown) can be placed through the two plain walled apertures 30 in the cylindrical tube 14. The padlock hasp will lie below the tow ball 78 to prevent theft of the coupling 10 and carrying base 53. The vehicle 70 has a spare wheel 82 mounted on its tailgate 84. For that reason, the set of apertures 40 in the profile 12 which are further from the cylindrical tube 14 are chosen for mounting the main tube 54 of the carrier base 53 and the vertical post 42. Those parts 53, 42 are then mounted using the bolts 48, 58. With the carrier base 53 in the horizontal position as shown, bicycles can be carried. The bicycles are placed with a wheel in each loop 62 of one of the cross pieces 56 and can be strapped to the tall part 68 or the vertical post 42 or its rods 52. When not in use, the carrier base 53 can be pivotted about the bolt 58 to lie parallel to the vertical post 42 and can be secured thereto by a catch (not shown).

The coupling 10 can equally be used on a vehicle which does not have a spare wheel on the back and in that case the apertures 38 in the profile 12 which are closer to the cylindrical tube 14 would be used, to reduce the cantilever force on the tow hitch and reduce the overall length of the vehicle and coupling.

## Claims

1. A carrier and a coupling for mounting the carrier on to a vehicle, the coupling (10) having means for removably mounting the coupling (10) to a tow ball of a vehicle, the carrier comprising a carrying base (53) which is pivotally mounted to the coupling (10) so as to be pivotable between a generally horizontal use position and a generally vertical storage position, first carrier mounting means (38, 58, 60) being provided for pivotally mounting the carrier to the coupling (10), a post (42) being provided mounted on the coupling (10) by first post mounting means (40, 48), the carrying base (53) being arranged to be attached to the post (42) in the storage position thereof, **characterised in that** second carrier mounting means (40, 58, 60) is provided for pivotally mounting the carrier to the coupling, the second carrier mounting means (40, 58, 60) being arranged to mount the carrier (10) further from the means for removably mounting the coupling to a tow ball of a vehicle than the first carrier mounting means (38, 58, 60) and hence further to the rear of the vehicle, in use, and second post mounting means (38, 48) is provided, the second post mounting means (38, 48) being arranged to mount the post (42) further from the means for removably mounting the coupling to a tow ball of a vehicle than the first post mounting means (40,48) and hence further to the rear of the vehicle, in use.

2. A carrier and a coupling as claimed in claim 1, further comprising at least one recessed part (20) which in use engages with a tow ball hitch bolt associated with a tow ball.

3. A carrier and a coupling as claimed in claim 2, in which the distance between the recessed part (20) and another part of the coupling (10) is adjustable.

4. A carrier and a coupling as claimed in claim 1, 2 or 3, in which the coupling (10) includes a main elongate element (12), means (14) to receive a tow ball connected to one end of the main elongate element (12), and a strut (18) between the tow ball receiving means (14) and the main elongate element (12).

5. A carrier and a coupling as claimed in claim 4, in which at least one of the first and second means (38, 58, 60; 40, 58, 60) for mounting the carrier is on the main elongate element (12) between the connection to the strut (18) and the connection to the tow ball receiving means (14).

6. A carrier and a coupling as claimed in claim 5, in which both the first and second means for mounting the carrier are between the connection to the strut (18) and the connection to the tow ball receiving means (14).

7. carrier and a coupling as claimed in any preceding claim, wherein the post forms part of a vertical frame (42, 52) mounted on the coupling (10), the carrying base (53) being arranged to be attached to the vertical frame (42, 52) in the storage position.

8. A carrier and a coupling as claimed in any preceding claim, wherein the carrier is a bicycle carrier.

## Patentansprüche

1. Träger und Kupplung zur Befestigung des Trägers an einem Fahrzeug, wobei die Kupplung (10) eine Einrichtung zur lösbaren Befestigung der Kupplung (10) an einem Anhängerkupplungskopf eines Fahrzeugs aufweist, der Träger eine Tragbasis (53) aufweist, die schwenkbar an der Kupplung (10) so befestigt ist, dass sie zwischen einer im Allgemeinen waagrechten Gebrauchsstellung und einer im Allgemeinen senkrechten Lagerstellung schwenkbar ist, eine erste Trägerbefestigungseinrichtung (38, 58, 60) zur schwenkbaren Befestigung des Trägers an der Kupplung (10) vorgesehen ist, eine Stütze (42) an der Kupplung (10) durch eine erste Stützenbefestigungseinrichtung (40, 48) befestigt vorgesehen ist, die Tragbasis (53) so angeordnet ist, dass sie an der Stütze (42) in der Lagerstellung davon angebracht ist,
**dadurch gekennzeichnet,**
**dass** eine zweite Trägerbefestigungseinrichtung (40, 58, 60) zum schwenkbaren Befestigen des Trägers an der Kupplung vorgesehen ist, wobei die zweite Trägerbefestigungseinrichtung (40, 58, 60) angeordnet ist, um den Träger (10) bei Gebrauch weiter von der Einrichtung zum lösbaren Befestigen der Kupplung an einem Anhängerkupplungskopf eines Fahrzeugs als die erste Trägerbefestigungseinrichtung (38, 58, 60) und damit weiter hinter dem Fahrzeug zu montieren, und
**dass** eine zweite Stützenbefestigungseinrichtung (38, 48) vorgesehen ist, wobei die zweite Stützenbefestigungseinrichtung (38, 48) angeordnet ist, um die Stütze (42) bei Gebrauch weiter von der Einrichtung zum lösbaren Befestigen der Kupplung an einem Anhängerkupplungskopf eines Fahrzeugs als die erste Stützenbefestigungseinrichtung (40, 48) und damit weiter hinter dem Fahrzeug zu montieren.

2. Träger und Kupplung nach Anspruch 1, ferner mit wenigstens einem ausgesparten Teil (20), welches bei Gebrauch mit einem zu einem Anhängerkupplungskopf gehörenden Anhängerkupplungskopf-Anhängebolzen in Eingriff steht.

3. Träger und Kupplung nach Anspruch 2, bei welchen der Abstand zwischen dem ausgesparten Teil (20) und einem weiteren Teil der Kupplung (10) einstellbar ist.

4. Träger und Kupplung nach Anspruch 1, 2 oder 3, bei welchen die Kupplung (10) ein langes Hauptelement (12), eine Einrichtung (14) zum Aufnehmen eines Anhängerkupplungskopfes, die mit einem Ende des langen Hauptelements (12) verbundenen ist, und eine Strebe (18) zwischen der Anhängerkupplungskopfaufnahmeeinrichtung (14) und dem langen Hauptelement (12) enthält.

5. Träger und Kupplung nach Anspruch 4, bei welchen sich wenigstens eine der ersten und der zweiten Einrichtung (38, 58, 60; 40, 58, 60) zum Befestigen des Trägers an dem langen Hauptelement (12) zwischen der Verbindung mit der Strebe (18) und der Verbindung mit der Anhängerkupplungskopfaufnahmeeinrichtung (14) befindet.

6. Träger und Kupplung nach Anspruch 5, bei welchen sich sowohl die erste als auch die zweite Einrichtung zum Befestigen des Trägers zwischen der Verbindung mit der Strebe (18) und der Verbindung mit der Anhängerkupplungskopfaufnahmeeinrichtung (14) befinden.

7. Träger und Kupplung nach einem der vorhergehenden Ansprüche, bei welchen die Stütze einen Teil eines an der Kupplung (10) befestigten senkrechten Rahmens (42, 52) bildet, wobei die Tragbasis (53) so angeordnet ist, dass sie an dem senkrechten Rahmen (42, 52) in der Lagerstellung angebracht ist.

8. Träger und Kupplung nach einem der vorhergehenden Ansprüche, bei welchen der Träger ein Fahrradträger ist.

## Revendications

1. Support et assemblage destinés à monter le support sur un véhicule, l'assemblage (10) disposant de moyens pour monter l'assemblage (10) de façon amovible sur une boule de remorquage d'un véhicule, le support comprenant une base de support (53) qui est montée pivotante par rapport à l'assemblage (10) de façon à pivoter entre une position d'utilisation généralement horizontale et une position de rangement généralement verticale, les premiers moyens de montage du support (38, 58, 60) étant prévus pour le montage de façon pivotante sur l'assemblage (10), un montant (42) étant conçu pour être monté sur l'assemblage (10) à l'aide des premiers moyens de montage du montant (40, 48), la base de support (53) étant agencée pour être attachée au montant (42) dans sa position de rangement, **caractérisés en ce que** les deuxièmes moyens de montage du support (40, 58, 60) sont prévus pour monter le support de façon pivotante par rapport à l'assemblage, les deuxièmes moyens de montage du support (40, 58, 60) étant agencés pour monter le support (10) plus éloigné des moyens destinés à monter l'assemblage de façon amovible sur une boule de remorquage d'un véhicule que les premiers moyens de montage du support (38, 58, 60) et par conséquent, plus éloigné de l'arrière du véhicule, en usage, et les deuxièmes moyens de montage du montant (38, 48) sont prévus, les deuxièmes moyens de montage du montant (38, 48) étant agencés pour monter le montant (42) plus éloigné des moyens destinés à monter l'assemblage de façon amovible sur une boule de remorquage d'un véhicule que des premiers moyens de montage du montant (40, 48) et par conséquent, plus éloigné de l'arrière du véhicule, en usage.

2. Support et assemblage selon la revendication 1, comprenant en outre au moins une partie encastrée (20) qui en usage entre en prise avec un boulon d'attelage de boule de remorquage associé à une boule de remorquage.

3. Support et assemblage selon la revendication 2 dans lesquels la distance entre la partie encastrée (20) et une autre partie de l'assemblage (10) est ajustable.

4. Support et assemblage selon les revendications 1, 2 ou 3 dans lesquelles l'assemblage (10) comprend un élément allongé principal (12), des moyens (14) pour recevoir une boule de remorquage reliée à une extrémité de l'élément allongé principal (12), et un étai (18) entre la boule de remorquage recevant des moyens (14) et l'élément allongé principal (12).

5. Support et assemblage selon la revendication 4, dans lesquels au moins un des premiers et deuxièmes moyens (38, 58, 60 ; 40, 58, 60) destinés au montage du support est situé sur l'élément allongé principal (12) entre la liaison à l'étai (18) et la liaison aux moyens de réception de la boule de remorquage (14).

6. Support et l'assemblage selon la revendication 5, dans laquelle à la fois les premiers et deuxièmes moyens destinés à monter le support sont situés entre la liaison à l'étai (18) et la liaison aux moyens de réception de la boule de remorquage (14).

7. Support et assemblage selon l'une quelconque des revendications précédentes, dans lesquels le montant: (42) avec deux tiges d'acier courbées (52) forme un cadre vertical monté sur l'assemblage (10), la base de support (53) étant agencée pour être attachée au cadre vertical en position de rangement.

8. Support et assemblage selon l'une quelconque des revendications précédentes, dans laquelle le support est un support pour bicyclette.
